# FASCICULE DE BREVET EUROPEEN

(11) **EP 1 415 133 B1**
(45) Date de publication et mention de la délivrance du brevet: **05.04.2006**
(21) Numéro de dépôt: 02784878.7
(22) Date de dépôt: 12.07.2002
(51) Int. Cl.: G01J 9/00, G02B 3/00

(54) **DISPOSITIF D'ANALYSE D'UN FRONT D'ONDE A RESOLUTION AMELIOREE**
EINRICHTUNG ZUR ANALYSE EINER WELLENFRONT MIT VERBESSERTER AUFLÖSUNG
DEVICE FOR ANALYSING A WAVEFRONT WITH ENHANCED RESOLUTION

(30) Priorité: 12.07.2001 FR 0109435
(43) Date de publication de la demande: 06.05.2004
(73) Titulaire: Imagine Optic, 91400 Orsay (FR)
(72) Inventeur: LEVECQ, Xavier, Jean-François, F-91110 Gif sur Yvette (FR); HARMS, Fabrice, F-75013 Paris (FR)
(74) Mandataire: Pontet, Bernard
(86) Numéro de dépôt international: PCT/FR2002/002495
(87) Numéro de publication internationale: WO 2003/006940

(56) Documents cités:
- WO-A-01/04591
- ES-A- 2 133 094
- US-A- 4 725 138
- US-A- 5 864 381
- US-A- 5 973 844

## Description

La présente invention concerne le domaine de l'analyse de front d'onde par les méthodes de type Hartmann et Shack-Hartmann.

Historiquement la méthode de Hartmann d'analyse de front d'onde introduit le concept d'échantillonnage de la lumière par un ensemble d'éléments d'échantillonnage de caractéristiques et de répartition connues, éléments qui sont, à l'origine, des ouvertures dans un écran opaque. L'analyse de la lumière diffractée par le dispositif permet de remonter à la forme de la surface d'onde de départ, grâce à la connaissance des positions des taches sur un écran prépositionné dans un plan appelé dans la suite plan de diffraction.

La méthode a cependant par conception besoin de flux lumineux conséquents, et Shack introduit, en particulier pour remédier à ce type de problème, les microlentilles comme éléments d'échantillonnage de la lumière.

Les progrès de la micro-optique, permettant de réaliser des microlentilles de caractéristiques très diverses, rendent cette méthode particulièrement souple : elle trouve ainsi de nombreuses applications dans la métrologie optique.

Les microlentilles sont classiquement dimensionnées avec de grandes focales par rapport à leurs dimensions, c'est-à-dire qu'elles sont très faiblement ouvertes, ce qui présente de nombreux avantages : une grande sensibilité aux variations de la phase locale, des tailles de tache permettant d'optimiser le calcul de leurs positions en particulier lorsque l'écran est un capteur CCD, la minimisation des aberrations introduites par ces éléments.

Les microlentilles ainsi dimensionnées travaillent la plupart du temps en limite de diffraction : chaque point de focalisation correspond à une figure de diffraction qui dépend des caractéristiques de la microlentille correspondante, en particulier de sa forme. Une figure de diffraction peut s'étendre suffisamment et chevaucher la ou les figures voisines dans le plan de diffraction, ce qui introduit une erreur dans le calcul de la position des taches et donc de la surface d'onde. Dans le cas de sources cohérentes, ce chevauchement s'accompagne de phénomènes d'interférences d'autant plus préjudiciables à la précision de mesure.

Dans l'objectif d'augmenter la résolution du dispositif d'analyse de front d'onde, on cherche à augmenter le nombre des microlentilles, et donc à en diminuer la taille, ce qui se traduit par une augmentation de la taille de la figure de diffraction et des risques de chevauchement desdites figures, ce qui risque de conduire à un effet contraire à l'effet recherché.

Une des solutions à ce problème consiste à modifier la transmission des microlentilles utilisées de manière à obtenir des figures de diffraction mieux localisées, c'est-à-dire moins étendues et donc moins susceptibles de se chevaucher. C'est le type de traitement préconisé par exemple dans la demande de brevet internationale WO 01/04591 A1, par la fabrication et l'utilisation d'un masque d'apodisation au niveau de chaque sous-pupille. Mais la réalisation de ce type de masque, comme leurs centrages au niveau de chacune des sous-pupilles, posent des difficultés technologiques non négligeables.

Le document US-A-5864 381 divulgue un système d'échantillonage automatique de pupilles.

La solution présentée ici consiste à modifier et à optimiser l'arrangement géométrique des sous-pupilles utilisées dans l'analyseur par exemple de type Shack-Hartmann, de façon à limiter le chevauchement des figures de diffraction dans le plan de diffraction.

Plus précisément, l'invention concerne un dispositif d'analyse d'un front d'onde, de type Hartmann ou Shack-Hartmann, comprenant les caractéristiques récitées dans la première revendication. Les revendications dépendantes concernent des modes de réalisation additionnels.

L'invention permet de réaliser ainsi un dispositif d'analyse de front d'onde aussi bien de type Hartmann que Shack-Hartmann, dont la résolution est améliorée, tout en permettant l'utilisation de sous-pupilles classiquement utilisées, sans composants d'apodisation spécifiques.

D'autres avantages et caractéristiques de l'invention apparaîtront plus clairement à la lumière de la description qui suit, illustrée par les figures annexées qui représentent :
- les figures 1A à 1D, des schémas de sous-pupilles ronde et carrée ainsi que leur figures de diffraction correspondantes.
- la figure 2, le schéma d'une disposition en matrice de sous-pupilles carrées tournées, selon un exemple de réalisation du dispositif selon l'invention.
- la figure 3, un schéma de figures de diffraction issues de sous-pupilles carrées tournées d'un angle permettant de diminuer sensiblement le phénomène de chevauchement.
- les figures 4A et 48, des courbes présentant la variation de l'erreur sur la mesure des positions des taches due au phénomène de chevauchement en fonction du déplacement de la tache centrale, ce pour les 3 types de sous-pupilles étudiés : carrée, carrée tournée d'un angle pris à 25°, ronde, pour un déplacement latéral et diagonal.
- les figures 5A et 5B, des courbes de variation de l'erreur sur la mesure des positions des taches du au phénomène de chevauchement en fonction du déplacement de la tache centrale, pour une matrice de sous-pupilles carrées tournées, ce pour différentes valeurs d'espacement entre sous-pupilles à ouverture constante.

Un point fondamental de l'analyse de front d'onde par les méthodes de Hartmann ou Shack-Hartmann est la localisation très précise dans le plan de diffraction des positions des points de focalisation issus des éléments d'échantillonnage (microlentilles ou trous), si l'on suppose un dimensionnement correct préalable. Dans la suite de la description, on appelle plan d'analyse du front d'onde le plan dans lequel sont agencés les éléments d'échantillonnage et plan de diffraction, le plan des taches de diffraction, correspondant au plan de focalisation dans le cas de l'utilisation de microlentilles.

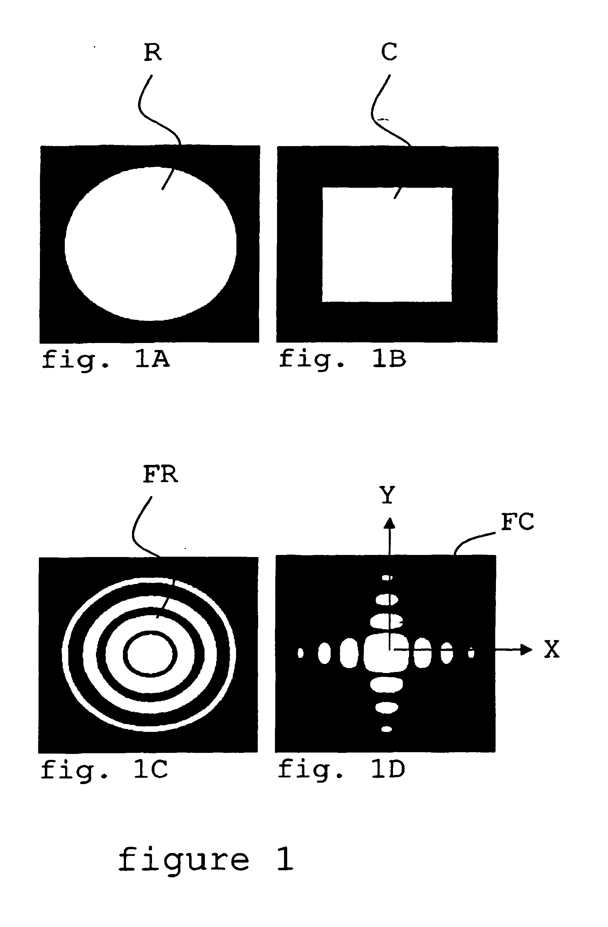

Les figures 1A à 1D illustrent les formes des éléments d'échantillonnage classiquement utilisés ainsi que les aspects des figures de diffraction correspondantes.

La tache d'Airy notée FR schématisée sur la figure 1C correspond à la figure de diffraction, dans le plan de diffraction, de la sous-pupille ronde notée R schématisée sur la figure 1A et s'étend de manière isotrope.

La figure de diffraction notée FC schématisée sur la figure 1D correspond à la figure de diffraction, dans le plan de diffraction, de la pupille carrée notée C schématisée sur la figure 1B et s'étend selon 2 directions perpendiculaires, notées X et Y sur le schéma, correspondant aux deux axes de la pupille.

La disposition en matrice des éléments précédemment décrits entraîne le chevauchement des figures de diffraction au niveau du plan de diffraction, puisque pour la pupille ronde l'étalement des taches est isotrope et pour la pupille carrée la disposition en matrice confond les axes des figures de diffraction voisines.

La localisation des taches, par un calcul de barycentre par exemple, est de ce fait rendue imprécise, en particulier lors du déplacement de l'une des taches : une partie de la figure de diffraction correspondant à l'une des taches vient chevaucher la tache voisine et entraîne un déplacement fictif des barycentres de ces dernières.

Le dispositif selon l'invention permet de réduire au maximum cet effet.

Selon l'invention en effet, la forme de chaque sous-pupille est telle que la figure de diffraction associée présente dans le plan de diffraction un ou plusieurs axes privilégiés, et les sous-pupilles sont orientées dans le plan d'analyse de telle sorte que, l'ensemble des sous-pupilles étant éclairées par un front d'onde incident plan, la figure de diffraction d'une sous-pupille dans ledit plan de diffraction ne chevauche sensiblement pas les figures de diffraction issues des sous-pupilles voisines. Autrement dit, les sous-pupilles sont orientées dans le plan d'analyse de telle sorte que les axes privilégiés de la figure de diffraction d'une sous-pupille sont décalés par rapport aux axes privilégiés des figures de diffraction des sous-pupilles voisines.

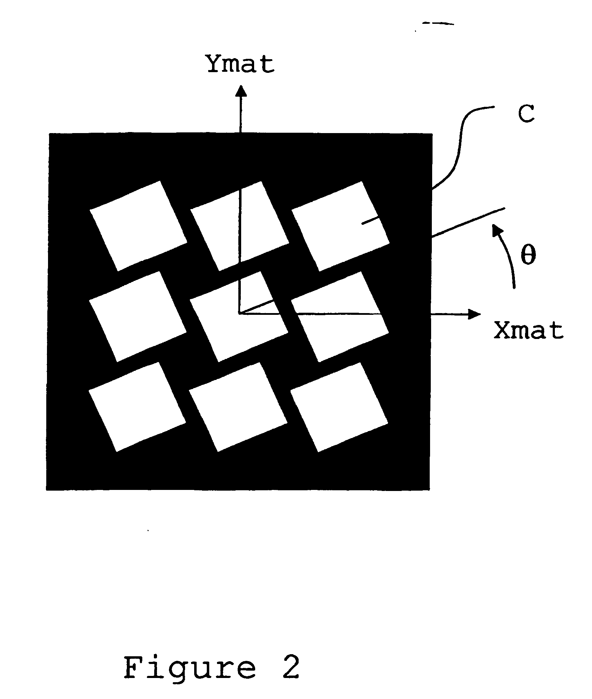

La figure 2 illustre un exemple d'agencement des sous-pupilles dans un dispositif selon l'invention. Les sous-pupilles notées C dans l'exemple de la figure 2 sont choisies sensiblement identiques, de forme carrée, qui est une des formes les plus couramment utilisées dans les dispositifs de type Hartmann et Shack-Hartmann d'analyse de front d'onde. De telles sous-pupilles présentent les avantages suivants :
- elles sont aisées à réaliser ;
- les figures de diffraction associées présentent des axes de diffraction privilégiés.

Dans l'exemple de la figure 2, les sous-pupilles sont d'autre part agencées sous forme d'une matrice carrée, matrice définie par ses deux axes perpendiculaires Xmat et Ymat. Dans cet exemple, chacune des sous-pupilles, notée FC, est tournée d'un angle θ par rapport à l'un des axes de la matrice, que nous prendrons comme étant Xmat pour l'exemple, comme schématisé sur la figure 2.

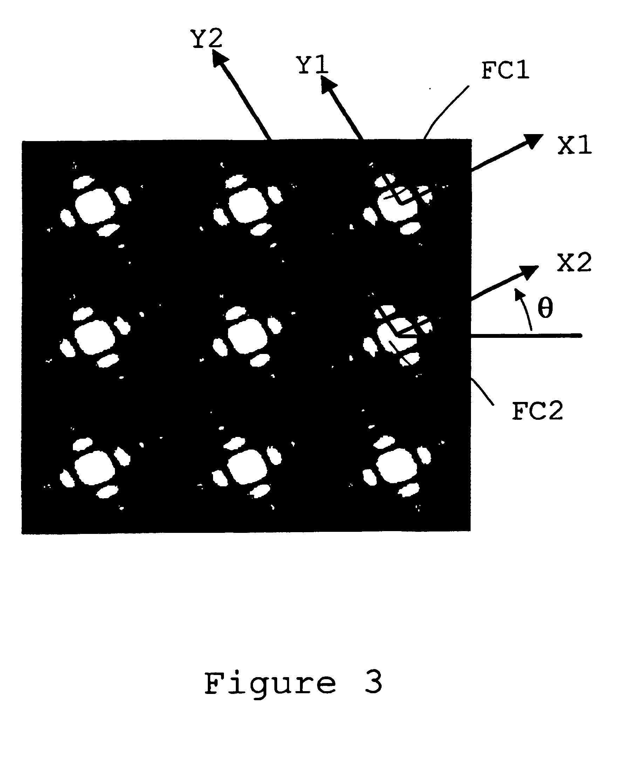

La figure 3 représente dans le plan de diffraction l'allure des taches de diffraction correspondant aux sous-pupilles de la figure 2. Cet arrangement permet, comme schématisé sur la figure 3 de décaler les axes d'étalement privilégiés des figures de diffraction dus à chacune des sous-pupilles, et de minimiser géométriquement le phénomène de chevauchement. Considérons sur le schéma de la figure 3 l'exemple de deux figures de diffraction notées FC1 et FC2 issues de deux sous-pupilles voisines. Les axes d'étalement privilégiés de ces figures sont notés respectivement X1, Y1 et X2, Y2. La rotation effectuée permet de décaler les axes X1 et X2, Y1 et Y2 qui étaient 2 à 2 confondus dans le cas de sous-pupilles carrées non tournées. L'angle de rotation noté θ de chacune des sous-pupille est choisi de telle sorte que les figures de diffraction de deux sous pupilles voisines n'interfèrent sensiblement pas.

Pour quantifier les effets du phénomène de chevauchement sur la précision de positionnement des taches, nous avons simulé la diffraction d'une grille de microlentilles, contenant 5 par 5 sous-pupilles agencées en matrice carrée , à une longueur d'onde de 670 nm, par ajout en amplitude des figures de diffraction issues de chacune des microlentilles prise séparément. Cette simulation laisse possible le choix de la forme des microlentilles (carrée, ronde, carrée tournée), de leur taille, de leur ouverture comme définie ci-après, du déplacement de la tache image issue d'une microlentille choisie, que nous prenons ici comme étant la microlentille centrale de la matrice afin de quantifier l'effet de son déplacement sur la plus grande zone possible. La simulation serait aisément transposable au cas de la méthode de Hartmann puisque les figures de diffraction issues de microlentilles ou de trous de forme identique sont sensiblement équivalentes.

On choisit un angle d'inclinaison des sous-pupilles tel que le phénomène de chevauchement des figures de diffraction voisines soit minimal. Cet angle dépend de la géométrie de répartition des sous-pupilles : dans le cas d'une géométrie symétrique comme c'est le cas pour notre exemple, la valeur de l'angle est prise à 25°, permettant de décaler au mieux les axes de répartition des figures de diffraction entre eux.

Cette simulation est effectuée dans le souci d'éviter tout artefact lié à l'échantillonnage : on suréchantillonne les modélisations, en prenant au minimum 100 échantillons par sous-pupille.

L'ouverture de la zone élémentaire d'analyse, à savoir la sous-pupille, est un paramètre important du dimensionnement du système. Ce paramètre est défini comme le rapport entre la focale des microlentilles et la taille de la sous-pupille correspondante. Pour les simulations effectuées nous prenons une ouverture de 33, meilleur compromis entre une ouverture trop grande qui aurait pour conséquence d'augmenter la taille des taches de diffraction et donc le chevauchement entre des taches voisines, et une ouverture trop faible qui aurait pour conséquence de trop diminuer la taille des taches et de rendre trop imprécis un calcul de barycentre après intégration par un capteur de type CCD.

On effectue un seuillage à 10% avant calcul du barycentre de chaque tache, afin de simuler au mieux le seuillage effectivement réalisé lors de la détection des taches par un capteur, de type CCD par exemple, pour s'affranchir du bruit de détection.

Nous simulons le déplacement de la tache image issue de la sous-pupille du centre de cette matrice 5 x 5, par ajout d'un tilt connu sur la phase incidente du front d'onde pris localement au niveau de cette sous-pupille centrale. Le calcul du barycentre sur chacune des taches issues de la matrice nous permet de remonter à la position de chacune de ces taches après déplacement connu de la tache centrale. On est donc capable de calculer l'erreur due au phénomène de chevauchement sur la position de chacune des taches.

Nous choisissons une dynamique de déplacement de la tache centrale correspondant à un déplacement maximal de 20 µm, ce qui correspond pour le dimensionnement choisi à une variation de phase locale au niveau d'une sous-pupille d'environ la longueur d'onde du faisceau simulé, variation non négligeable et englobant la majeure partie des mesures faites en analyse de front d'onde.

Enfin nous simulons deux types de déplacement de la tache centrale : déplacement latéral selon l'un des deux axes de répartition des sous-pupilles sur la matrice, déplacement diagonal par un déplacement égal et simultané selon chacun des deux axes. Etant donné la symétrie de répartition des sous-pupilles, ces deux types de déplacement permettent de donner une indication précise des erreurs générées, du fait du phénomène de chevauchement, par n'importe quel type de déplacement dans la dynamique choisie ci-dessus.

Le calcul par barycentre de la position des taches images après déplacement de la tache centrale permet de définir un critère de qualité global sur la précision de mesure des positions des taches, à savoir la variance, notée V, calculée à partir des erreurs sur la position des taches principales par calcul barycentrique après déplacement de la tache centrale. La variance correspond ainsi à la somme des carrés des erreurs dues au phénomène de chevauchement sur le calcul barycentrique de la position de chaque tache. Nous notons taches principales les taches de focalisation voisines de la tache déplacée qui subissent le plus d'influence de la part du phénomène de chevauchement des figures de diffraction pour ce qui est du calcul de leur position. Un examen rapide des valeurs de barycentres permet d'identifier ces taches principales comme étant :
- la tache centrale déplacée
- les quatre taches entourant directement la tache centrale et situées de part et d'autre de cette dernière selon les deux axes principaux de la matrice.

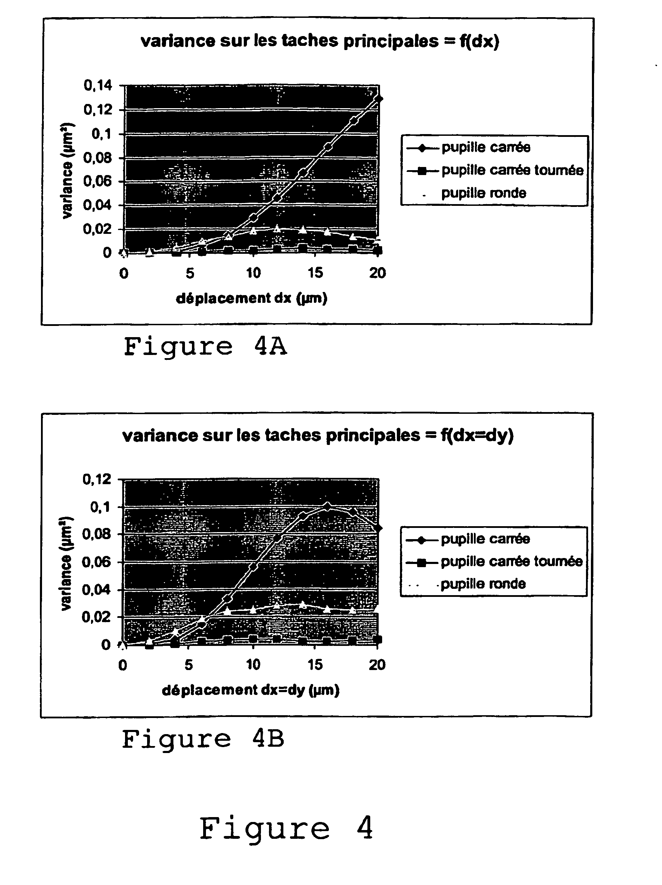

La figure 4 montre l'évolution de la variance V définie plus haut avec le déplacement de la tache centrale, et ce pour les trois types de pupille considérés : carrée, carrée tournée d'un angle choisi afin de minimiser le phénomène de chevauchement, ronde. La figure 4A présente cette évolution en fonction d'un déplacement latéral de la tache centrale, la figure 4B en fonction d'un déplacement diagonal de cette même tache.

On remarque ainsi que l'arrangement géométrique réalisé permet d'améliorer la précision de calcul des positions des taches par rapport aux formes et dispositions de sous-pupilles jusque là utilisées, d'un facteur pouvant ici aller jusqu'à un facteur 10 sur la variance par rapport à une matrice de sous-pupilles carrées non-tournées.

Une seconde simulation permet de visualiser l'amélioration de la résolution d'un dispositif de type Shack-Hartmann (ou Hartmann) selon l'invention. Pour cela on considère une matrice de sous-pupilles carrées tournées selon la méthode ici développée, on réduit l'espacement entre les sous-pupilles constituant la matrice d'analyse, tout en modifiant la focale de manière à conserver toujours la même ouverture.

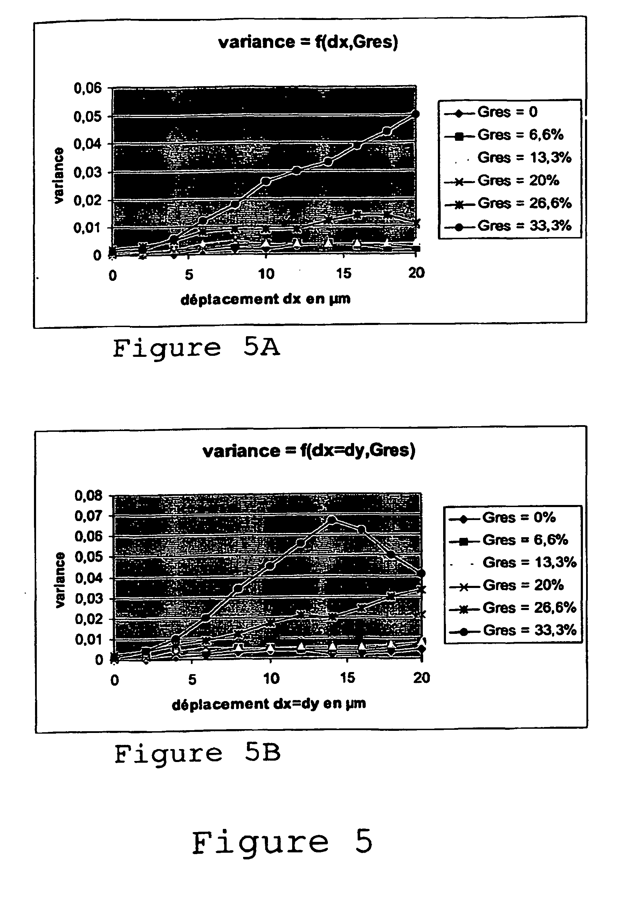

La figure 5 permet de quantifier l'évolution de la variance V définie plus haut en fonction du déplacement de la tache centrale, pour différentes valeurs du pourcentage d'augmentation de la résolution, noté Gᵣₑₛ, gain correspondant au pourcentage de diminution de l'espacement entre les sous-pupilles. La figure 5A présente les résultats de cette simulation pour un déplacement latéral, noté dx, de la tache centrale. La figure 5B présente les résultats pour un déplacement diagonal, noté dx=dy de cette même tache.

On souhaite quantifier l'augmentation de la résolution qu'il est possible d'atteindre grâce au dispositif selon l'invention en conservant les mêmes performances sur le calcul de la position des taches qu'un système qui utiliserait une matrice de sous-pupilles classique.

La comparaison des figures 4A et 5A, 4B et 5B, permet de montrer qu'il est possible d'améliorer la résolution du dispositif d'analyse de front d'onde par Hartmann ou Shack-Hartmann en conservant la même précision de mesure de position des taches de 33% par rapport à une matrice de sous-pupilles carrées classique, de 27% par rapport à une matrice de sous-pupilles rondes.

L'exemple de réalisation décrit précédemment n'est pas limitatif. Notamment, d'autres formes de sous-pupilles peuvent être utilisées dans le dispositif selon l'invention et d'autres agencement des sous-pupilles sont possible du moment que les figures de diffraction correspondantes aux sous-pupilles présentent un ou deux axes privilégiés et qu'en fonction des formes choisies, les sous-pupilles sont agencées dans le plan d'analyse de telle sorte que le ou les axes privilégiés des figures de diffraction soient décalés les uns par rapport aux autres de manière à réduire le chevauchement entre les figures de diffraction.

Ainsi, grâce au dispositif selon l'invention, Il est possible d'augmenter le nombre de microlentilles ou trous par unité de surface par rapport à une matrice ayant un arrangement géométrique « classique » de ses microlentilles ou trous, tout en conservant la même précision de calcul de position des taches de diffraction produites par la matrice. On augmente ainsi le nombre de points d'échantillonnage de la méthode Shack Hartmann ou Hartmann, et donc sa résolution.

## Revendications

1. Dispositif d'analyse d'un front d'onde, de type Hartmann ou Shack-Hartmann, comprenant notamment un ensemble d'éléments d'échantillonnage agencés dans un plan d'analyse, et formant autant de sous-pupilles (C) permettant l'échantillonnage du front d'onde incident, et un plan de diffraction dans lequel sont analysées les taches de diffraction des différentes sous-pupilles éclairées par le front d'onde incident, la forme de chaque sous-pupille étant telle que la figure de diffraction (FC) associée présente dans le plan de diffraction un ou plusieurs axes d'étalement privilégiés (X1, Y1, X2, Y2) de la figure de diffraction, **caractérisé en ce que** les sous-pupilles sont orientées dans le plan d'analyse de telle sorte que le ou les axes d'étalement privilégiés de la figure de diffraction d'une souspupille sont décalés par rapport aux axes d'étalement privilégiés des figures de diffraction des sous-pupilles voisines, permettant ainsi de limiter le chevauchement des figures de diffraction.

2. Dispositif selon la revendication 1, **caractérisé en ce que** les sous-pupilles étant agencées dans le plan d'analyse sous forme d'une matrice à deux dimensions, les sous-pupilles sont de forme parallélépipédique, la figure de diffraction d'une sous-pupille présentant deux axes d'étalement privilégiés de la figure de diffraction, et **en ce que** chaque sous-pupille est orientée par rapport aux directions de la matrice de telle sorte que les axes d'étalement privilégiés de la figure de diffraction de ladite sous-pupille présentent un angle non nul avec les directions de la matrice.

3. Dispositif selon la revendication 2, **caractérisé en ce que** les sous-pupilles étant de forme sensiblement identique, elles présentent sensiblement la même orientation par rapport aux directions de la matrice de telle sorte que les axes d'étalement privilégiés des figures de diffraction sont sensiblement parallèles, non confondus.

4. Dispositif selon l'une quelconque des revendications 2 ou 3, **caractérisé en ce que** les sous-pupilles sont de forme sensiblement rectangulaire.

5. Dispositif selon la revendication 4, **caractérisé en ce que** les sous-pupilles sont de forme sensiblement carrée.

6. Dispositif selon l'une quelconque des revendications précédentes, **caractérisé en ce que** les sous-pupilles sont agencées dans le plan d'analyse sous forme d'une matrice carrée à deux dimensions, **en ce que** les sous-pupilles sont de forme carrée, sensiblement identiques, et **en ce que** chaque sous-pupille est orientée par rapport aux directions de la matrice d'un angle θ dont la valeur est optimisée pour limiter le chevauchement des figures de diffraction.

7. Dispositif selon l'une des revendications précédentes, **caractérisé en ce que** les éléments d'échantillonnage sont réalisés par des ouvertures de forme prédéterminée, formées dans un écran opaque.

8. Dispositif selon l'une des revendications 1 à 6, **caractérisé en ce que** les éléments d'échantillonnage sont réalisés par des microlentilles associées à des ouvertures de forme prédéterminée.

## Claims

1. A device for analysing a wavefront, of the Hartman or Shack-Hartmann type, comprising in particular a set of sampling elements arranged in an analysis plane, and forming as many sub-pupils (C) for sampling the incident wavefront, and a diffraction plane wherein are analysed the diffraction spots of the different sub-pupils illuminated by the incident wavefront, the shape of each sub-pupil being such that the associated diffraction figure (FC) has in the diffraction plane one or several preferential spreading axes (X1, Y1, X2, Y2) of the diffraction figures, **characterised in that** the sub-pupils are oriented in the analysis plane so that the preferential spreading axes of the diffraction figure of a sub-pupil are offset relative to the preferential spreading axes of the diffraction figures of neighbouring sub-pupils, thereby enabling to limit the overlapping of the diffraction figures.

2. A device according to claim 1, **characterised in that** the sub-pupils being arranged in the analysis plane in the form of a two-dimensional matrix, the sub-pupils are parallelepipedal in shape, the diffraction figure of a sub-pupil having two preferential spreading axes of the diffraction figures, and **in that** each sub-pupil is oriented with respect to the directions of the matrix so that the preferential spreading axes of the diffraction figure of said sub-pupil show a non-zero angle with the directions of the matrix.

3. A device according to claim 2, **characterised in that** the sub-pupils being substantially identical in shape, they show substantially the same orientation with respect to the directions of the matrix so that the preferential spreading axes of the diffraction figures are substantially parallel, not confused.

4. A device according to one of the claims 2 or 3, **characterised in that** the sub-pupils are substantially rectangular in shape.

5. A device according to claim 4, **characterised in that** the sub-pupils are substantially square in shape.

6. A device according to any of the previous claims, **characterised in that** the sub-pupils are arranged in the analysis plane in the form of a two-dimensional square matrix, **in that** the sub-pupils are square in shape, substantially identical, and **in that** each sub-pupil is oriented with respect to the directions of the matrix by an angle θ whereof the value is optimised to limit the overlapping of the diffraction figures.

7. A device according to any of the previous claims, **characterised in that** the sampling elements are realised through apertures of predetermined shape, formed in an opaque screen.

8. A device according to one of the claims 1 to 6, **characterised in that** the sampling elements are realised by micro-lenses associated with apertures of predetermined shape.

## Patentansprüche

1. Vorrichtung zur Analyse einer Wellenfront vom Typ Hartmann oder Shack-Hartmann, umfassend insbesondere eine Einheit von Abtastelementen, die in einer Analysebene angeordnet sind und ebenso viele Unterpupillen (C) bilden, die die Abtastung der einfallenden Wellenfront gestatten, und eine Beugungsebene, in der die Beugungsflecken der einzelnen durch die einfallende Wellenfront beleuchteten Unterpupillen analysiert werden, wobei die Form jeder Unterpupille so beschaffen ist, dass die zugeordnete Beugungsfigur (FC) in der Beugungsebene eine oder mehrere vorrangige Ausbreitungsachsen (X1, Y1, X2, Y2) der Beugungsfigur aufweist, **dadurch gekennzeichnet, dass** die Unterpupillen in der Analyseebene so ausgerichtet sind, dass die vorrangige Ausbreitungsachse oder die vorrangigen Ausbreitungsachsen der Beugungsfigur einer Unterpupille bezüglich der vorrangigen Ausbreitungsachsen der Beugungsfiguren der benachbarten Unterpupillen versetzt sind und auf diese Weise gestatten, die Überlagerung der Beugungsfiguren zu begrenzen.

2. Vorrichtung nach Anspruch 1, **dadurch gekennzeichnet, dass**, wenn die Unterpupillen in der Analyseebene in Form einer zweidimensionalen Matrix angeordnet sind, die Unterpupillen parallelepipedförmig sind, wobei die Beugungsfigur einer Unterpupille zwei vorrangige Ausbreitungsachsen der Beugungsfigur aufweist, und dass jede Unterpupille bezüglich der Richtungen der Matrix so ausgerichtet ist, dass die vorrangigen Ausbreitungsachsen der Beugungsfigur dieser Unterpupille einen Winkel ungleich Null mit den Richtungen der Matrix aufweisen.

3. Vorrichtung nach Anspruch 2, **dadurch gekennzeichnet, dass** die Unterpupillen, wenn sie von im Wesentlichen identischer Form sind, im Wesentlichen dieselbe Ausrichtung bezüglich der Richtungen der Matrix aufweisen, so dass die vorrangigen Ausbreitungsachsen der Beugungsfiguren im Wesentlichen parallel sind und nicht zusammenfallen.

4. Vorrichtung nach einem der Ansprüche 2 oder 3, **dadurch gekennzeichnet, dass** die Unterpupillen von im Wesentlichen rechtwinkliger Form sind.

5. Vorrichtung nach Anspruch 4, **dadurch gekennzeichnet, dass** die Unterpupillen von im Wesentlichen quadratischer Form sind.

6. Vorrichtung nach einem der vorhergehenden Ansprüche, **dadurch gekennzeichnet, dass** die Unterpupillen in der Analyseebene in Form einer quadratischen zweidimensionalen Matrix angeordnet sind, dass die Unterpupillen von im Wesentlichen identischer quadratischer Form sind und dass jede Unterpupille bezüglich der Richtungen der Matrix in einem Winkel θ ausgerichtet ist, dessen Wert so optimiert ist, dass die Überlagerung der Beugungsfiguren begrenzt wird.

7. Vorrichtung nach einem der vorhergehenden Ansprüche, **dadurch gekennzeichnet, dass** die Abtastelemente durch Öffnungen vorbestimmter Form, die in einem lichtundurchlässigen Schirm gebildet sind, hergestellt sind.

8. Vorrichtung nach einem der Ansprüche 1 bis 6, **dadurch gekennzeichnet, dass** die Abtastelemente durch Mikrolinsen gebildet sind, die Öffnungen von vorbestimmter Form zugeordnet sind.
